**Europäisches Patentamt**

(19) **European Patent Office**

**Office européen des brevets**

(11) Veröffentlichungsnummer: **0 006 457**
**B1**

(12) **EUROPÄISCHE PATENTSCHRIFT**

(45) Veröffentlichungstag der Patentschrift:
**30.12.81**

(21) Anmeldenummer: **79101632.2**

(22) Anmeldetag: **28.05.79**

(51) Int. Cl.³: **H 01 B 13/04,** G 02 B 5/16

(54) Verfahren zum lagenweisen SZ-Verseilen von Verseilelementen elektrischer oder optischer Kabel und Vorrichtung zur Durchführung des Verfahrens.

(30) Priorität: **28.06.78 DE 2828959**

(43) Veröffentlichungstag der Anmeldung:
**09.01.80 Patentblatt 80/1**

(45) Bekanntmachung des Hinweises auf die Patenterteilung:
**30.12.81 Patentblatt 81/52**

(84) Benannte Vertragsstaaten:
**CH FR GB**

(56) Entgegenhaltungen:
**DE-A-1 490 355**
**DE-A-1 801 063**
**DE-A-2 421 471**
**DE-B-1 271 800**
**US-A-3 842 190**

(73) Patentinhaber: **SIEMENS AKTIENGESELLSCHAFT Berlin und München, Postfach 22 02 61, D-8000 München 22 (DE)**

(72) Erfinder: **Vogelsberg, Dieter, Fichtestrasse 7, D-8630 Coburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Verfahren zum lagenweisen SZ-Verseilen von Verseilelementen elektrischer oder optischer Kabel und Vorrichtung zur Durchführung des Verfahrens

Die Erfindung liegt auf dem Gebiet der Verseilung elektrischer und optischer Kabel und Leitungen und behandelt die Lagenverseilung entsprechender Verseilelemente unter besonderer Berücksichtigung der SZ-Verseiltechnik.

Die Anfang der sechziger Jahre einsetzende Entwicklung auf dem Gebiet der SZ-Verseiltechnik für elektrische Kabel und Leitungen hat zu SZ-Verseilverfahren und SZ-Verseilmaschinen geführt, mit denen zwei bis fünf Verseilelemente, beispielsweise Adern für Mantelleitungen, Adern für Paare, Dreier oder Sternvierer von Nachrichtenkabeln, problemlos miteinander verseilt werden. Für die Mehrzahl der entwickelten SZ-Verseilverfahren, nämlich diejenigen, die mit einem konzentrierten oder einem nichtkonzentrierten Längenspeicher arbeiten, ist charakteristisch, dass sich die endgültige Verdrillung des Verseilgutes aus einer Überlagerung von mindestens zwei entgegengesetzt gerichteten Verseilvorgängen ergibt, die sich am Eingang und am Ausgang der SZ-Verseilvorrichtung abspielen. Dies gilt beispielsweise für die Verseilung mit einem rotierenden Längenspeicher wechselnder Drehrichtung, für die Verseilung mit einer umlaufenden Verdrehungsvorrichtung und sich änderndem Speicherinhalt, für die Verseilung mit Hilfe eines am Ende einer Tordierstrecke angeordneten Verseilkopfes (DE-B-17 65 452) sowie für die Verseilung mit zwei am Anfang und am Ende einer Tordierstrecke angeordneten, mit gleichbleibender Drehrichtung umlaufenden Verseilköpfen.

Die heute auf dem Markt angebotenen SZ-Verseilmaschinen arbeiten in aller Regel mit gestreckter Führung des Verseilgutes während der Verseilung, wobei das Verseilgut mit Hilfe von rotierenden Verseilköpfen von aussen in Umfangsrichtung kraftschlüssig umfasst wird. Im Bereich der eigentlichen Verseilstrecke wird das Verseilgut frei durch die Luft oder mittels besonderer Führungselemente geführt. Die Verseilköpfe ändern ihre Drehbewegung in Abständen, die auf das Zeitintervall zwischen der ersten Verseilung eines Längsabschnittes des Verseilgutes beim Einlaufen in die Verseilstrecke und der zweiten Verseilung dieses Längsabschnittes beim Auslaufen aus der Verseilstrecke abgestimmt sind. Es ist üblich, die Drehbewegung der Verseilköpfe sprunghaft zwischen zwei Werten zu verändern. Die Periode dieser stufenweisen Änderung beträgt in aller Regel das Doppelte des erwähnten Zeitintervalls, kann aber auch ein ungeradezahliges Teil davon sein (DE-B-15 15 730, FR-A-14 47 458). Insbesondere im Hinblick auf die Verseilung von fünf und mehr Verseilelementen ist bereits vorgeschlagen worden, den Mittelwert der beim Einlaufen der Verseilelemente in die SZ-Verseilmaschine ausgeübten Verdrillung auf den Mittelwert der resultierenden SZ-Verdrillung des Verseilgutes abzustimmen (DE-B-22 30 972, DE-A-27 26 172.9).

Seit den Anfängen der SZ-Verseilung hat man auch Verfahren und Vorrichtungen im Auge gehabt, mit denen Verseilelemente lagenweise SZverseilt werden können. Hierbei wurde als eigentliches Verseilorgan im wesentlichen eine mit wechselnder Drehrichtung umlaufende Verseilscheibe vorgesehen (DE-C-631 929). Eine besondere Schwierigkeit bei der Entwicklung geeigneter Verfahren und Maschinenkonstruktionen für diese Art der lagenweisen SZ-Verseilung besteht jedoch darin, dass die Verseilung zu möglichst grossen Abständen der Umkehrstellen der Drallrichtung in dem hergestellten Verseilgut führen soll. Um dies zu erreichen, kann man jedes Verseilelement vor dem Einlaufen in die Verseilscheibe durch ein flexibles Röhrchen führen; hierdurch wird eine unmittelbare Auswirkung der von der Verseilscheibe rückwärts ausgeübten Verdrillung auf die Verseilelemente unterbunden. Zur mehrlagigen Verseilung werden mehrere solcher Verseilaggregate hintereinander angeordnet (US-A-3 847 190). Weiterhin ist kürzlich vorgeschlagen worden, der Verseilscheibe ein zur Verseilachse konzentrisch angeordnetes Speicherelement zuzuordnen (DE-A-28 04 480.6). Derartige Verfahren und Vorrichtungen erlauben jedoch nur, mit einer SZ-Verseilvorrichtung jeweils eine einzige Verseillage aufzubringen.

Zur mehrlagigen Verseilung von Verseilelementen elektrischer Kabel in einem Arbeitsgang sind im übrigen konventionell, also mit gleichbleibender Drehbewegung und gleichbleibender Abzugsgeschwindigkeit arbeitende Verseilmaschinen bekannt, bei denen die raumfest angeordneten Verseilelemente mehreren gestaffelt angeordneten Verseilnippeln zugeführt, die Verseilung durch eine konstante Drehbewegung der Aufwickelvorrichtung und weiterer, jedem Verseilnippel zugeordneter Tordierungseinrichtungen bewirkt und eine Schlaglängenvariation zwischen benachbarten Verseillagen durch Verschiebung eines oder mehrerer Verseilnippel erreicht werden (DE-B-14 90 355). Eine veränderte Konstruktion dieser Mehrlagenverseilmaschine sieht vor, als Tordierungseinrichtungen rotierende Zwischenspeicher zu verwenden, mit denen gleichzeitig infolge periodischer Änderung ihrer Drehbewegung die Schlaglängenvariation bewirkt wird (DE-A-18 01 063).

Der Erfindung liegt die Aufgabe zugrunde, zur SZ-Verseilung von Verseilelementen elektrischer oder optischer Kabel und Leitungen ein Verfahren zu schaffen, mit dem die Verseilelemente bei gestreckter Führung im gleichen Arbeitsgang in mehreren Verseillagen verseilt werden können. Weiterhin soll eine zur Durchführung dieses Verfahrens geeignete Vorrichtung angegeben werden.

Zur Lösung der genannten Aufgabe geht die Erfindung von dem bekannten Verfahren zum kontinuierlichen SZ-Verseilen von Verseilelementen elektrischer oder optischer Kabel und Leitungen zu einer Verseilgruppe aus (DE-B-

15 15 730), bei dem die Verseilelemente in drei im gleichen Arbeitsgang aufeinanderfolgenden Schritten ein erstes Mal miteinander verseilt, anschliessend im verseilten, gestreckten Zustand vorübergehend frei durch die Luft oder mittels besonderer Führungselemente geführt und danach ein zweites Mal miteinander verdrillt werden, bei dem weiterhin eine oder mehrere der die Verdrillung bewirkenden Verfahrensgrössen stufenweise periodisch in Abständen (Stufendauer) geändert werden, die ein ungeradzahliges Teil (1/3, 1/5, 1/7 ...) des Zeitintervalls zwischen der ersten und der zweiten Verdrillung eines Längsabschnittes der Verseilelemente der Verseilgruppe betragen, und bei dem schliesslich die Überlagerung der ersten und der zweiten Verdrillung zu einer resultierenden Verdrillung mit abschnittsweise wechselnder Drallrichtung führt. Gemäss der Erfindung sind in Ausgestaltung dieses Verseilverfahrens folgende drei Massnahmen vorgesehen:

1. Zur mehrlagigen SZ-Verseilung von Verseilelementen werden die Verseilelemente jeder auf die Verseilgruppe aufzubringenden Verseillage nach dem ersten, aber noch vor dem zweiten Verdrillen eines Längsabschnittes der Verseilelemente der Verseilgruppe auf die Verseilgruppe aufgebracht und dabei ein erstes Mal verdrillt und später gemeinsam mit den Verseilelementen der Verseilgruppen ein zweites Mal verdrillt.

2. Eine oder mehrere der die Verdrillung bewirkenden Verfahrensgrössen werden in m geradezahligen, wenigstens vier gleich grossen, gleichmässig zu- und abnehmend sowie periodisch aufeinanderfolgenden Stufen (Periodenlänge L) geändert.

3. Die zeitlichen Abstände zwischen der ersten und der zweiten Verdrillung eines Längsabschnittes der Verseilelemente der Verseilgruppe oder einer Verseillage sind von Verseilgruppe zu Verseillage bzw. von Verseillage zu Verseillage unterschiedlich und um eine Stufendauer grösser oder kleiner als ein beliebiges p-faches (p = 0, 1, 2, 3 ...) der Periodenlänge (L).

Ein derartiges SZ-Verseilverfahren bietet also den Vorteil, dass gleichzeitig mit der Verseilung von Verseilelementen zu einer Verseilgruppe weitere Verseilelemente in einer oder mehreren Verseillagen auf die Verseilgruppe aufgeseilt werden können. Durch die zeitliche Staffelung der ersten Verseilung der Verseilelemente der Verseillagen gegenüber der ersten Verseilung der Verseilelemente der Verseilgruppe wird dabei erreicht, dass die Umkehrstellen der Drallrichtung in benachbarten Verseillagen gegeneinander in Längsrichtung versetzt sind, so dass die Umkehrstellen der Drallrichtung einer Verseillage durch einen sauber verseilten S- oder Z-Abschnitt der nächsten Verseillage überdeckt ist. Im übrigen wird bei richtiger Dimensionierung der Verseilparameter jede einzelne Verseillage nur zwei Verseil- bzw. Umseilvorgängen unterworfen, wie es bei den meisten anderen bekannten SZ-Verseilmethoden der Fall ist. Der von der Verseilgruppe gebildete innere Kern des Verseilgutes wird in diesem Fall also nicht häufiger umgeseilt als die äussere Verseillage.

Für das neue SZ-Verseilverfahren ist u. a. charakteristisch, dass eine oder mehrere der die Verdrillung bewirkenden Verfahrensgrössen, insbesondere die Drehbewegung entsprechender Verseilköpfe, innerhalb einer Verseilperiode in mehreren gleich langen Schritten nach einer symmetrischen Treppenkurve fortlaufend vergrössert und verkleinert werden. Die Anzahl der Schritte muss dabei mindestens vier, kann aber auch jedes weitere ganzzahlige Vielfache von zwei betragen.

Ein weiteres charakteristisches Merkmal des neuen SZ-Verseilverfahren ist darin zu sehen, dass der aus erster und zweiter Verdrillung bestehende Verseilvorgang der einzelnen Verseillagen unterschiedlich lange dauert, woraus sich trotz einer für alle Verseillagen gleichen Periodenlänge der symmetrischen Treppenkurve der Versatz der Drallumkehrstellen der Drallrichtung in einander benachbarten Verseillagen ergibt.

Zur Durchführung des neuen SZ-Verseilverfahrens ist in Weiterbildung der Erfindung eine Vorrichtung geeignet, die in Übereinstimmung mit bekannten SZ-Verseilvorrichtungen aus raumfest angeordneten Vorräten für die Verseilelemente, aus einer SZ-Verseileinrichtung mit einem ersten und einem zweiten Verseilpunkt (Verseilnippel, Umlenkrolle), aus einem dem zweiten Verseilpunkt oder aus je einem dem ersten und dem zweiten Verseilpunkt zugeordneten rotierbaren, das Verseilgut von aussen kraftschlüssig umfassenden Verseilkopf und aus einer Abzug- und Aufwickeleinrichtung besteht und bei der erfindungsgemäss zum Aufbringen einer Verseillage auf die Verseilgruppe zwischen dem ersten und dem zweiten Verseilpunkt für jede Verseillage ein weiterer Verseilnippel mit einem unmittelbar nachgeschalteten, rotierbaren Verseilkopf angeordnet ist.

Bei einer derartigen SZ-Verseilvorrichtung sind also zwischen den beiden Verseilpunkten, die beispielsweise durch Verseilnippel oder Umlenkrollen gebildet werden, weitere Verseilnippel angeordnet, mit denen der durch die beiden Verseilpunkte begrenzte, gestreckte Speicher so unterteilt wird, dass die in den einzelnen Verseilnippeln zugeführten Verseilelemente innerhalb des gestreckten Speichers verschieden lange Abschnitte durchlaufen. Für die Verseilung einer Verseilgruppe und das anschliessende Aufseilen mehrerer Verseillagen wird somit insgesamt nur ein einziger gestreckter Speicher benötigt. Eine besonders einfache Ausführungsform der neuen Vorrichtung erhält man, wenn der Abstand zwischen zwei aufeinanderfolgenden ersten Verseilpunkten jeweils das Doppelte der Länge beträgt, die ein Längselement des Verseilgutes während einer Verseilstufe der symmetrischen Treppenkurven vorwärtsbewegt wird und wenn der Abstand zwischen dem letzten ersten Verseilnippel, das ist der Verseilnippel der letzten aufzubringenden Verseillage, und dem zweiten Verseilpunkt gleich ist der einfachen Länge, die ein Längselement des Verseilgutes während einer Verseilstufe der symmetrischen Treppenkurve vorwärtsbewegt wird.

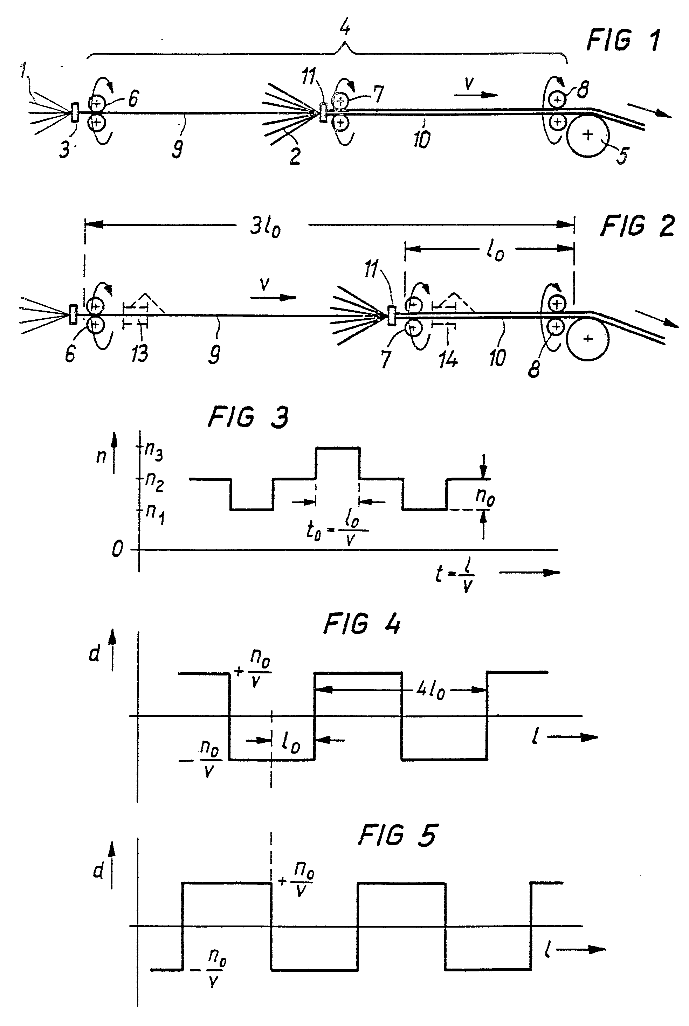

Die Figuren 1 bis 10 zeigen in schematischer Darstellung drei Ausführungsbeispiele von Vorrichtungen zur Durchführung des neuen Verfahrens sowie verschiedene Diagramme zur Erläuterung der im Rahmen des neuen SZ-Verseilverfahrens vorgesehenen Verfahrensschritte.

Fig. 1 zeigt eine SZ-Verseilvorrichtung, die aus bekannten Konstruktionselementen aufgebaut ist. Die Verseileinrichtung dient zum Verseilen mehrerer Verseilelemente 1 zu einer Verseilgruppe 9 und zum gleichzeitigen Aufseilen mehrerer Verseilelemente 2 zu einer Verseillage 10. Die Verseilung der Verseilelemente 1 erfolgt dabei mit Hilfe einer bekannten SZ-Verseileinrichtung, die vom Verseilnippel 3 und der Umlenkscheibe 5 begrenzt ist und die beiden, jeweils dem Verseilnippel 3 und der einen Verseilpunkt bildenden Umlenkscheibe 5 zugeordneten rotierbaren Verseilköpfe 6 und 8 enthält. Zum Zwecke der SZ-Verseilung wird das Verseilgut durch die SZ-Verseileinrichtung mit der konstanten Geschwindigkeit v transportiert, während die mit der Drehzahl n rotierenden Verseilköpfe 6 und 8 in bestimmten Abständen synchron ihre Drehbewegung ändern. Die Verseilköpfe 6 und 8 bestehen in bekannter Weise entweder aus einer Umlenkrolle, die vom Verseilgut einmal umschlungen wird, oder aus zwei oder mehr einander gegenüberstehenden Rollen, zwischen denen das Verseilgut hindurchläuft, oder aus zwei gegeneinandergepressten Raupenbändern.

Bei der Verseilung laufen die Verseilelemente 1 von nicht näher dargestellten, raumfest angeordneten Vorräten ab und werden mittels einer ebenfalls nicht näher dargestellten Abzug- und Aufwickeleinrichtung abgezogen und aufgewickelt.

Zum Aufseilen einer Verseillage auf die Verseilgruppe 9 sind innerhalb des von dem Verseilnippel 3 und der Umlenkscheibe 5 begrenzten gestreckten Speichers 4 ein Verseilnippel 11 sowie ein unmittelbar dahinter vorgesehener rotierbarer Verseilkopf 7 angeordnet. Dieser Verseilkopf rotiert synchron mit den Verseilköpfen 6 und 8. Während der Verseilung durchlaufen die Verseilelemente 2 den gestreckten Speicher 4 nur im Bereich zwischen dem Verseilnippel 11 und der Umlenkscheibe 5, während die Verseilelemente 1 den gesamten gestreckten Speicher durchlaufen.

Beim Betrieb der dargestellten Verseilvorrichtung sind die Drehbewegungen der Verseilköpfe 6, 7 und 8 und der Abstand des Verseilnippels 11 zu den Verseilpunkten 3 und 5 aufeinander abzustimmen. Ein Ausführungsbeispiel hierfür zeigt Fig. 2, bei der der Abstand zwischen dem Verseilnippel 11 und der Umlenkscheibe 5 eine bestimmte Entfernung $l_0$ beträgt und der Abstand zwischen dem Verseilnippel 3 und der Umlenkscheibe 5 das Dreifache dieses Abstandes, nämlich $3 l_0$. Beim Betrieb der Verseilvorrichtung werden die Drehzahlen n der Verseilköpfe 6, 7 und 8 entsprechend dem in Fig. 3 dargestellten Drehzahldiagramm verändert, d.h. die Drehzahl wird nach einer symmetrischen Treppenkurve in vier gleich langen Schritten je Wiederholperiode fortlaufend vergrössert und verkleinert, wobei die konstante Stufenhöhe mit $n_0$ bezeichnet ist und die Stufenlänge $t_0$ dem Quotienten aus dem Abstand $l_0$ der Verseilpunkte 11 und 5 und der Abzugsgeschwindigkeit v entspricht. Mit l ist die durchlaufende Länge der Verseilelemente bezeichnet.

Durch den Verseilnippel 11 wird der gestreckte Speicher so unterteilt, dass die Verseilgruppe 9 und die Verseilelemente der äusseren Verseillage 10 den gestreckten Speicher in verschiedenen langen Abschnitten durchlaufen, die jeweils um eine Stufenlänge $l_0$ grösser oder kleiner sind als ein beliebiges p-faches der Periodenlänge $T = m \cdot l_0$ (mit p = 0, 2, 3 ... und m = Anzahl der gleich langen Schritte innerhalb einer Wiederholperiode). Im einfachsten Fall lässt sich der gestreckte Speicher, wie es in Fig. 2 dargestellt ist, in zwei ineinander verschachtelte Abschnitte der Längen $l_1$ und $3 l_0$ unterteilen. Während der Verseilung ist demnach für die Verseilgruppe 9 die Speicherstrecke $3 l_0$ wirksam, während für die Verseillage 10 nur eine Speicherstrecke von der Länge $l_0$ wirksam ist.

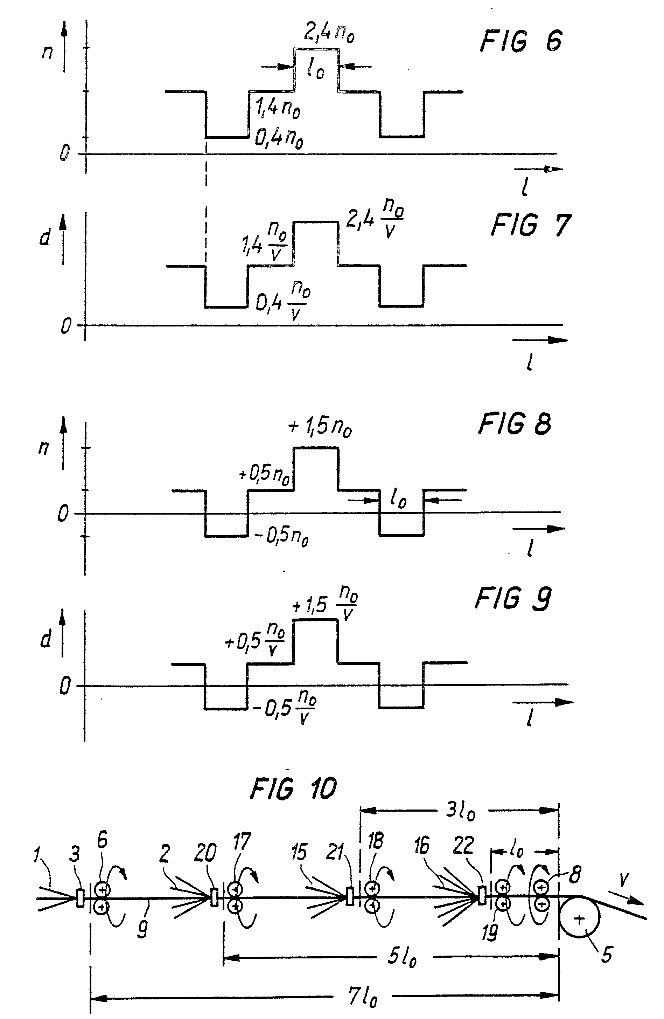

Aus den beim Einlaufen und beim Verlassen der Speicherstrecke auf die Verseilelemente 1 und 2 ausgeübten Verdrillungen erhält man unter Berücksichtigung der verschiedenen Laufzeiten der Verseilelemente im Speicher für die Verseilgruppe 9 und die Verseillage 10 resultierende Gesamtdrillungen d, wie sie in den Figuren 4 und 5 dargestellt sind. Sowohl in der Verseilgruppe 9 als auch in der Verseillage 10 wechselt die Drallrichtung in Abständen $2 l_0$, wobei zwischen der Verseilgruppe 9 und der Verseillage 10 ein Phasenversatz der Länge $l_0$ vorhanden ist. Die Verseilgruppe 9 wechselt demnach ihre Drallrichtung jeweils in der Mitte zwischen zwei Umkehrstellen der Drallrichtung der Verseillage 10.

Da sich die in Fig. 3 dargestellte symmetrische Treppenfunktion mit der Periode $4 l_0$ wiederholt, erhält man dasselbe Ergebnis, wenn man für den gestreckten Speicher anstelle der Paarung $l_0/3 l_0$ die Paarungen $3 l_0/5 l_0$ oder $5 l_0/7 l_0$ usw. wählt.

Bei der Durchführung des neuens SZ-Verseilverfahrens können in beliebiger Auswahl oder Kombination die Durchlaufgeschwindigkeit des Verseilgutes, die Abstände der Verseilpunkte und Verseilköpfe zueinander oder die Drehbewegungen der Verseilköpfe geändert werden. Die einfachsten Ausführungsformen ergeben sich bei Änderung der Drehbewegungen der Verseilköpfe und im übrigen konstant gehaltenen Verfahrensgrössen. Bei Änderung der Drehbewegung der Verseilköpfe ergeben sich für das absolute Drehzahlniveau gewisse Grenzen, die durch die zulässige mechanische Beanspruchung der Verseilelemente infolge der Verdrillung gegeben sind. So sollte die Drillung d = n/v der Verseilelemente innerhalb der Speicherstrecke nicht sehr viel grösser oder kleiner als die endgültige resultierende Drillung der Verseilelemente sein. Diese Forderung begrenzt auch die Anzahl der Stufen innerhalb der symmetrischen Treppenkurve.

Beispielsweise erscheint es zulässig, im gestreckten Speicher eine Drillung der Verseilelemente zuzulassen, die um den Faktor 2,5 kleiner bzw. grösser als die endgültige, resultierende Drillung ist. In diesem Fall ist es günstig, den Drehzahlverlauf gemäss Fig. 6 zu wählen, bei dem also drei Drehzahlstufen mit den Werten $0,4 \, n_o$, $1,4 \, n_o$ und $2,4 \, n_o$ gewählt werden. Ein solcher Drehzahlverlauf hat den Vorteil, dass die Drillung, wie in Fig. 7 dargestellt, innerhalb des gestreckten Speichers weder für die Verseilgruppe 9 noch die Verseillage 10 ihr Vorzeichen wechselt. Umkehrstellen der Drallrichtung entstehen erst am Ende der Speicherstrecke, so dass besondere Massnahmen für das Fixieren der Umkehrstellen innerhalb des Speichers nicht zu treffen sind.

Unter praktischen Einsatzbedingungen ist mitunter eine Dimensionierung erforderlich, bei der die Drillung $d = n/v$ innerhalb der Speicherstrecke nur zwischen dem 0,5fachen und dem 1,5fachen der endgültigen Drillung $n_o/v$ liegen darf. In diesem Fall empfiehlt sich ein Drehzahlverlauf gemäss dem in Fig. 8 dargestellten Diagramm, gemäss dem die Drehrichtung der Verseilköpfe in gewissen Abständen gewechselt wird. Der entsprechende Verlauf der Drillung innerhalb der Speicherstrecke ist in Fig. 9 wiedergegeben. Demnach wechselt die Drallrichtung innerhalb der Speicherstrecke sowohl für den Kern als auch für die Verseillage periodisch. Damit der Verseilverband innerhalb der Speicherstrecke nicht auseinanderfallen kann, müssen die Umkehrstellen der Drallrichtung dort zusammengehalten werden. Dies kann beispielsweise mit Hilfe von Haltewendeln geschehen, die mit Hilfe von in Fig. 2 dargestellten Zentralspinnern 13 und 14 aufgebracht werden. Anstelle derartiger Spinner können auch rotierende Raupenbandführungen verwendet werden.

Die innerhalb der SZ-Verseileinrichtung vorhandenen Verseilköpfe 6, 7 und 8 sind bezüglich ihrer Drehzahl aufeinander abzustimmen. Wenn diese Drehzahlen untereinander gleich gewählt werden, sind die Schlaglängen der Verseilgruppe und der Verseillage einander gleich und konstant. In vielen Fällen ist es jedoch nicht erwünscht, dass die Verseilgruppen und die darauf aufgebrachten Verseillagen genau dieselbe Schlaglänge haben, insbesondere nicht bei gleicher Schlagrichtung. Um unterschiedliche Schlaglängen zu erzielen, lässt man die Verseilköpfe 6, 7 und 8 mit unterschiedlichen Drehzahlen rotieren. Diese können beispielsweise in Richtung auf den zweiten Verseilpunkt zunehmend gestaffelt sein.

In jedem Fall muss aber der Wechsel der Drehzahlen der Verseilköpfe synchron erfolgen.

Bei der Verseilung von Verseilelementen mit grossen Querschnitten setzt sich wegen der Steifigkeit der Verseilelemente die Drehung des durch den Verseilkopf 7 bewegten Stranges bis zum ersten Verseilnippel 3 hin fort, ohne dass man hinter diesem Verseilnippel einen Verseilkopf 6 benötigt. In einem solchen Fall kann der Verseilkopf 6 auch weggelassen werden.

Ein abschliessendes, in Fig. 10 dargestelltes Ausführungsbeispiel behandelt die gleichzeitige SZ-Verseilung mehrerer Verseillagen um eine Verseilgruppe. In diesem Beispiel wird davon ausgegangen, dass auf eine SZ-verseilte Verseilgruppe 9 eine erste SZ-Verseillage 23, eine zweite SZ-Verseillage 24 und eine dritte SZ-Verseillage 25 aufgebracht werden. Die Drehzahlen der Verseilköpfe 6, 17, 18 und 19, von denen die letzten drei unmittelbar hinter den Verseilnippeln 20 für die Verseilelemente 2 der ersten Verseillage, hinter dem Verseilnippel 21 für die Verseilelemente 15 der zweiten Verseillage und hinter dem Verseilnippel 22 für die Verseilelemente 16 der dritten Verseillage angeordnet sind, werden entsprechend der in Fig. 8 dargestellten Drehzahlfunktion geändert. Die gesamte Länge des gestreckten Speichers beträgt dabei $7 \, l_o$, wobei innerhalb der Speicherstrecke für die verschiedenen Verseillagen die Teilstrecken $l_o$, $3 \, l_o$ und $5 \, l_o$ vorgesehen sind. Entsprechend den früheren Erläuterungen ergeben sich für die Verseilgruppe 9 und für die zweite Verseillage 24 resultierende Drillungen gemäss Fig. 4. Die Verseillagen 23 und 25 erhalten dagegen Drillungen gemäss Fig. 5. Die Schlaglänge ist in allen Lagen gleich uns beträgt $s = v/n_o$.

Bei dieser mehrlagigen SZ-Verseilung wird jede Drallwechselstelle einer Verseillage durch einen gleichförmig verseilten S- oder Z-Abschnitt der darüberliegenden Lage überdeckt. Der Abstand der Umkehrstellen der Drallrichtung beträgt im fertigen Verseilgut $2 \, l_o$.

Auch bei dem in Fig. 10 dargestellten Ausführungsbeispiel lassen sich die in den Verseillagen erzielten Schlaglängen modulieren, wenn man die Drehzahlen der Verseilköpfe nicht gleich gross wählt. In jedem Fall müssen jedoch die Drehzahländerungen aller Verseilköpfe gemeinsam erfolgen.

Die dargestellten SZ-Verseilvorrichtungen sind, wie bereits erwähnt, zur lagenweisen Verseilung von Verseilelementen geeignet. Entsprechende Kabelaufbauten ergeben sich insbesondere bei Steuerkabeln mit beispielsweise 1 + 6 + 12 Adern oder bei lagenverseilten symmetrischen, niederpaarigen Nachrichtenkabeln oder auch bei der Herstellung von Leiterseilen für elektrische Kabel und Leitungen. Bei der Verseilung von Drähten kann es angebracht sein, hinter dem jeweiligen Verseilkopf ein Verdichtungs- oder Formwerkzeug anzuordnen, das mit dem Verseilkopf um die Verseilachse rotiert, oder den Verseilkopf selbst als Verdichtungs- oder Formwerkzeug auszugestalten.

Bei der praktischen Durchführung kann man beispielsweise mit einer Abzugsgeschwindigkeit $v = 50$ m/min, einer Stufenhöhe $n_o = 500$ U/min und einer Stufenlänge $l_o = 2$ m arbeiten.

**Patentansprüche**

1. Verfahren zum kontinuierlichen SZ-Verseilen von Verseilelementen elektrischer oder optischer Kabel und Leitungen zu einer Verseilgruppe, bei dem die Verseilelemente (2) in drei im gleichen Arbeitsgang aufeinanderfolgenden Schritten ein erstes Mal miteinander verdrillt, anschliessend im verseilten, gestreckten Zustand vorübergehend frei durch die Luft oder mittels besonderer Führungselemente geführt und danach ein zweites Mal miteinander verdrillt werden, bei dem eine oder mehrere der die Verdrillung bewirkenden Verfahrensgrössen (n) stufenweise periodisch in Abständen (Stufendauer) geändert werden, die ein ungeradzahliges Teil (1/3, 1/5, 1/7 . . .) des Zeitintervalls zwischen der ersten und der zweiten Verdrillung eines Längsabschnittes der Verseilelemente der Verseilgruppe betragen, und die Überlagerung der ersten und der zweiten Verdrillung zu einer resultierenden Verdrillung mit abschnittsweise wechselnder Drallrichtung führt, dadurch gekennzeichnet, dass zur mehrlagigen SZ-Verseilung von Verseilelementen die Verseilelemente (2) jeder auf die Verseilgruppe (9) aufzubringende Verseillage (10) nach dem ersten, aber noch vor dem zweiten Verdrillen eines Längsabschnittes der Verseilelemente der Verseilgruppe auf die Verseilgruppe aufgebracht und dabei ein erstes Mal verdrillt und später gemeinsam mit den Verseilelementen der Verseilgruppe ein zweites Mal verdrillt werden, dass eine oder mehrere der die Verdrillung bewirkenden Verfahrensgrössen (n) in m geradzahligen, wenigstens vier gleich grossen, gleichmässig zu- und abnehmend sowie periodisch (Periodenlänge L) aufeinanderfolgenden Stufen ($l_o$) geändert werden und dass die zeitlichen Abstände zwischen der ersten und der zweiten Verdrillung eines Längsabschnittes der Verseilelemente der Verseilgruppe oder einer Verseillage von Verseilgruppe zu Verseillage bzw. von Verseillage zu Verseillage unterschiedlich und um eine Stufendauer ($l_o$) grösser oder kleiner als ein beliebiges p-faches (p = 0, 1, 2, 3 . . .) der Periodenlänge (L) sind.

2. Vorrichtung zur Durchführung des Verfahrens zum mehrlagigen SZ-Verseilen von Verseilelementen elektrischer oder optischer Kabel und Leitungen gemäss Anspruch 1, bestehend aus raumfest angeordneten Vorräten für die Verseilelemente, aus einer SZ-Verseileinrichtung mit einem ersten (3) und einem zweiten (5) Verseilpunkt (Verseilnippel, Umlenkrolle) und einem der zweiten Verseilpunkt zugeordneten, rotierenden, das Verseilgut von aussen kraftschlüsig umfassenden Verseilkopf (6, 8) und aus einer Abzug- und Aufwickeleinrichtung, dadurch gekennzeichnet, dass zum Aufbringen einer Verseillage (10) auf die Verseilgruppe (9) zwischen dem ersten (3) und dem zweiten (5) Verseilpunkt für jede Verseillage ein weiterer Verseilnippel (11) mit unmittelbar nachgeschaltetem, rotierendem Verseilkopf (7) angeordnet ist.

3. Vorrichtung nach Anspruch 2, dadurch gekennzeichnet, dass alle Verseilköpfe (6, 7, 8) mit jeweils gleicher Drehzahl und Drehrichtung umlaufen.

4. Vorrichtung nach Anspruch 2, dadurch gekennzeichnet, dass die Verseilköpfe mit gleicher Drehrichtung, aber jeweils voneinander abweichender, in Richtung auf den zweiten Verseilpunkt gestaffelter Drehzahl umlaufen.

5. Vorrichtung nach Anspruch 2, bei der die Drehrichtung der Verseilköpfe in Abständen änderbar ist, dadurch gekennzeichnet, dass zwischen aufeinanderfolgenden Verseilnippeln (3, 11) ein Spinner (13) zum Aufbringen einer Haltewendel auf das Verseilgut oder eine oder mehrere, mit den Verseilköpfen rotierende Raupenbandführungen für das Verseilgut angeordnet sind.

6. Vorrichtung nach einem der Ansprüche 2 bis 5 zum SZ-Verseilen von Drähten zu einem Leiterseil eines elektrischen Kabels, dadurch gekennzeichnet, dass einem oder mehreren der Verseilnippel ein Verdichtungs- oder Formwerkzeug nachgeschaltet ist oder dass der jeweilige Verseilnippel als Verdichtungs- oder Formwerkzeug ausgebildet ist.

7. Vorrichtung nach einem der Ansprüche 2 bis 6, dadurch gekennzeichnet, dass der Abstand zwischen zwei aufeinanderfolgenden ersten Verseilpunkten (3, 11) jeweils das Doppelte der Länge ($l_o$) beträgt, die ein Längselement des Verseilgutes während einer Verseilstufe vorwärtsbewegt wird, und dass der Abstand zwischen dem letzten ersten Verseilpunkt (11) und dem zweiten, gemeinsamen Verseilpunkt (5) gleich ist der einfachen Länge ($l_o$), die ein Längselement des Verseilgutes während einer Verseilstufe vorwärtsbewegt wird.

**Claims**

1. A process for the continuous SZ stranding of stranding elements of electrical or optical cables and lines to form a strand group, wherein the stranding elements (2) in three successive steps which take place in the same operation, are twisted together for a first time, subsequently convoyed for a limited time, in the stranded, stretched state, unsupported through the atmosphere, or by means of special guide elements, and then twisted together for a second time, wherein one or more of the process variables (n) which effect the twisting, is or are periodically changed in stepwise fashion at intervals (step duration) which are an odd-numbered part (1/3, 1/5, 1/7 . . .) of the time interval between the first and second twisting steps for a longitudinal section of the strand elements of the strand group, and wherein the superimposition of the first and second twists leads to a resultant twist in which the direction of twist alternates from section to section, characterised in that for the multi-layer SZ stranding of stranding elements, the stranding elements (2) of each strand layer (10) which is to be applied to the strand group (9) are, subsequent to the first but prior to the second twisting of a longitudinal section of the stranding elements of the strand group, applied to the strand group and thereby twisted for a first time, and are subsequently twisted for a second time, together with the stranding elements of the strand group; that one or more of the process variables (n) which produce the twisting is or are changed in a periodic manner (period length L) in m even-numbered steps ($l_o$) which are at least four in number, are equal in length, and follow one another with uniform increase and decrease; and that the time intervals between the first and second twisting steps for a longitudinal section of the stranding elements of the strand group, or of a strand layer, vary from strand group to strand layer, or from strand layer to strand layer, and are greater or smaller by one step length ($l_o$) then a p-multiple selected at will (p = 0, 1, 2, 3 . . .) of the period length (L).

2. Apparatus for carrying out the process for the multi-layer SZ stranding of stranding elements of electrical or optical and lines as claimed in Claim 1, comprising spatially fixed supply means for the stranding elements; an SZ stranding device comprising first (3) and second (5) stranding points (stranding nipple, guide roller), and a rotating stranding head or heads (6, 8) assigned to the second stranding point, or to the first and second strand points respectively, and which grasps the material to be stranded from the outside in a force-locking manner; and a drawing-off and winding-up means, characterised in that for each strand layer (10) to be applied to the strand group (9), a further stranding nipple (1) with an immediately following, rotating stranding head (7), is provided between the first (3) and the second (5) stranding point.

3. Apparatus as claimed in Claim 2, characterised in that all the stranding heads (6, 7, 8) rotate at the same speed and in the same direction.

4. Apparatus as claimed in Claim 2, characterised in that the stranding heads rotate in the same direction but at different speeds which are stepped in the direction of the second stranding point.

5. Apparatus as claimed in Claim 2, wherein the direction of rotation of the stranding heads can be altered at intervals, characterised in that, between successive stranding nipples (3, 11), there is arranged a spinner (13) which serves to apply a supporting coil to the material to be stranded, or there are aranged one or more caterpillar track conveyors for the material to be stranded which rotate with the stranding heads.

6. Apparatus as claimed in one of Claims 2 to 5 for the SZ stranding of wires to form a stranded conductor of an electric cable, characterised in that one or more of the stranding nipples is followed by a compressing or shaping tool, or that the respective stranding nipple is in the form of a compressing or shaping tool.

7. Apparatus as claimed in one of Claims 2 to 6, characterised in that the distance between two successive first stranding points (3, 11) is, in each case, double the length ($l_o$) by which a longitudinal element of the material to be stranded is moved forwards during a stranding stage, and that the distance between the last first stranding point (11) and the common second stranding point (5) is equal to the elementary length ($l_o$) by which a longitudinal element of the material to be stranded moves forward during a stranding step.

**Revendications**

1. Procédé pour réaliser le câblage SZ en continu d'éléments de câblage de câbles et de conducteurs électriques ou optiques pour former un groupe de câblage, selon lequel des éléments de câblage (2) sont torsadés entre eux une première fois en trois étapes se succédant au cours de la même phase opératoire, sont ensuite guidés de façon passagère, à l'état câblé sans prétorsion, librement dans l'air au moyen d'organes particuliers de guidage et sont ensuite torsadés entre eux une seconde fois, et selon lequel une ou plusieurs grandeurs du procédé (n), provoquant le torsadage, sont modifiées périodiquement par échelons à des intervalles (durées d'échelon), qui sont égaux à une fraction impaire (1/3, 1/5, 1/7 . . .) de l'intervalle de temps entre le premier torsadage et le second torsadage d'une section de longueur des éléments de câblage du groupe de câblage, et selon lequel la superposition du premier torsadage et du second torsadage conduit à un torsadage résultant dont le sens de torsion change par section, caractérisé en ce que pour réaliser le câblage SZ d'éléments de câblage en couches multiples, les éléments de câblage (2) de chaque couche de câblage (10), devant être déposés sur le groupe de câblage (9), sont déposés sur ce dernier après le premier torsadage, mais avant le second torsadage d'une section de longueur des éléments de câblage du groupe de câblage et sont torsadés une première fois et sont torsadés ultérieurement une seconde fois en commun avec les éléments de câblage, qu'une ou plusieurs grandeurs du procédé (n) provoquant le torsadage sont modifiées selon un nombre m pair d'échelons ($l_o$), au moins quatre échelons de même taille, se succédant périodiquement (durée de période L) et augmentant et diminuant de façon uniforme et que les intervalles de temps entre le premier et le second torsadage d'une section de longueur des éléments de câblage ou d'une couche de câblage diffèrent du groupe de câblage à une couche de câblage ou bien d'une couche de câblage à une autre couche de câblage et sont supérieurs ou inférieurs, d'une durée d'échelons ($l_o$), à un multiple p quelconque (p = 0, 1, 2, 3 . . .) de la durée de période (L).

2. Dispositif pour la mise en œuvre du procédé pour réaliser le câblage SZ en couches multiples d'éléments de câblage de câbles et de conducteurs électriques ou optiques selon la revendication 1, constitué par des réserves disposées fixes dans l'espace pour les éléments de câblage, par un dispositif de câblage SZ comportant un premier point de câblage (3) et un second point de câblage (5) (filière de câblage, galet de renvoi) et par une tête de câblage rotative (6, 8) enserrant de l'extérieur, selon une liaison de force, le produit de câblage et associée au second point de câblage ou deux têtes de câblage (6, 8) de ce type associé chacune au premier et au second points de câblage, et par un dispositif de tirage et d'enroulement, caractérisé en ce que pour le dépôt d'une couche de câblage (10) sur le groupe de câblage (9), une autre filière de câblage (1) comportant une tête de câblage rotative (7), branchée directement en amont de la filière, est disposée entre le premier point de câblage (3) et le second point de câblage (5), pour chaque couche de câblage.

3. Dispositif selon la revendication 2, caractérisé en ce que toutes les têtes de câblage (6, 7, 8) tournent avec des vitesses de rotation identiques et des sens de rotation identiques.

4. Dispositif selon la revendication 2, caractérisé en ce que les têtes de câblage tournent avec le même sens de rotation, mais avec des vitesses de rotation différant les unes des autres et échelonnées en direction du second point de câblage.

5. Dispositif selon la revendication 2, dans lequel le sens de rotation des têtes de câblage peut être modifié par intervalles, caractérisé en ce qu'une rubaneuse (13) permettant le dépôt d'une spirale de fixation sur le produit de câblage ou bien un ou plusieurs systèmes de guidage à bandes à chenilles tournant avec les têtes de câblage et prévus pour le produit de câblage sont disposés entre deux filières successives de câblage (3, 11).

6. Dispositif selon l'une des revendications 2 à 5 pour réaliser le câblage SZ de fils pour former un toron d'un câble électrique, caractérisé en ce qu'un outil de compactage ou de formage est branché en série et en aval d'une ou de plusieurs des filières de câblage ou bien que la filière respective de câblage est réalisée sous la forme d'un outil de compactage ou de formage.

7. Dispositif selon l'une des revendications 2 à 6, caractérisé en ce que la distance entre deux premiers points successifs de câblage (3, 11) est égale au double de la longueur ($l_o$) dont un élément longitudinal du produit de câblage est déplacé pendant un échelon de câblage, et que la distance entre le dernier (1) des premiers points de câblage et le second point commun de câblage (5) est égale à la longueur simple ($l_o$) dont un élément longitudinal du produit de câblage est avancé pendant un échelon de câblage.

*FIG 1*

*FIG 2*

*FIG 3*

*FIG 4*

*FIG 5*

FIG 6

FIG 7

FIG 8

FIG 9

FIG 10